## Europäisches Patentamt
## European Patent Office
## Office européen des brevets

(19)

(11) Veröffentlichungsnummer : **0 040 403**
**B1**

(12) **EUROPÄISCHE PATENTSCHRIFT**

(45) Veröffentlichungstag der Patentschrift :
22.06.83

(21) Anmeldenummer : 81103698.7

(22) Anmeldetag : 14.05.81

(51) Int. Cl.³ : **F 16 L 55/24, B 65 D 59/06,**
**B 60 K 25/04**

(54) Schutzhaube zur Verhinderung der Verschmutzung der Stirnfläche einer Kupplungshälfte.

(30) Priorität : 16.05.80 US 150453

(43) Veröffentlichungstag der Anmeldung :
25.11.81 Patentblatt 81/47

(45) Bekanntmachung des Hinweises auf die Patenterteilung : 22.06.83 Patentblatt 83/25

(84) Benannte Vertragsstaaten :
AT BE CH DE FR GB IT LI NL SE

(56) Entgegenhaltungen :
FR A 2 447 201
GB A 657 381
GB A 2 065 479

(73) Patentinhaber : **DEERE & COMPANY**
**1 John Deere Road**
**Moline Illinois 61265 (US)**

(72) Erfinder : **Kittle, Carl Edwin**
**2312 Primrose**
**Cedar Falls Iowa 50613 (US)**
Erfinder : **Price, James Lee**
**1928 Rainbow Drive**
**Cedar Falls Iowa 50613 (US)**

(74) Vertreter : **Gramm, Werner, Prof. Dipl.-Ing.**
**Patentanwälte Gramm + Lins Theo-**
**dor-Heuss-Strasse 2**
**D-3300 Braunschweig (DE)**

« Schutzhaube zur Verhinderung der Verschmutzung der Stirnfläche einer Kupplungshälfte »

Die Erfindung betrifft eine Schutzhaube zur Verhinderung der Verschmutzung der Stirnfläche einer Kupplungshälfte, z. B. der an einem Traktor vorgesehenen Gegenhälfte einer Schlauchkupplung für Hydraulikleitungen, mit einer durchlöcherten Membranwandung aus deformierbarem elastischen Material zum Durchstecken der anderen Kupplungshälfte.

Die meisten landwirtschaftlichen und auch einige industrielle Traktoren sind mit einem Paar oder mehreren Paaren Hydraulikanschlüssen, wie z. B. Kupplungshälften ausgestattet, die an der Rückseite des Fahrzeugs angebracht sind. Diese hydraulischen Kupplungen weisen Verbindungsmittel auf, die zur Aufnahme einer einsteckbaren Kupplungshälfte dienen, die an dem Hydraulikschlauch eines Arbeitsgerätes befestigt sind. Wird. das Arbeitsgerät ausgewechselt, müssen auch die Hydraulikschläuche von der Bedienungsperson getrennt bzw. miteinander verbunden werden. Wird die am Schlauch sitzende Kupplungshälfte aus der z. B. am Traktor befestigten Kupplungshälfte herausgezogen, so wird eine geringe Menge der Hydraulikflüssigkeit zwischen den beiden Enden der Kupplungshälften eingeschlossen. Dieses Hydrauliköl haftet an der Stirnfläche der zur Aufnahme der Schlauchkupplungshälfte bestimmten Gegenhälfte der Kupplung und bildet hier einen klebrigen Belag, an dem sich Staub, Schmutz und andere Verunreinigungen niederschlagen können. Wird an eine derart verschmutzte Kupplungshälfte der Hydraulikschlauch eines anderen Arbeitsgerätes angeschlossen, so werden die vorstehend genannten Verunreinigungen in das Hydrauliksystem gedrückt und führen hier zu Störungen.

Zur Verhinderung dieser Verschmutzung ist es bekannt, die Stirnfläche der zu schützenden Kupplungsgegenhälfte mit einer Abdeckung oder Haube zuversehen. Diese Hauben weisen bei bekannten Ausführungsformen einen einzigen Schlitz auf, durch den die Schlauchkupplungshälfte hindurch gesteckt werden kann, um eine Verbindung mit der Kupplungsgegenhälfte herzustellen. Ein einziger Schlitz kann aber wie vorstehend erläuterte Verschmutzung höchstens verringern, nicht aber verhindern. Denn bei der Anordnung nur eines Schlitzes ist es nicht möglich, daß sich dieser an dem gesamten Umfang der Schlauchkupplungshälfte abdichtend anlegt. Vielmehr können durch den teilweise aufsperrenden Schlitz nach wie vor Verunreinigungen eindringen. Ein weiterer Nachteil dieser vorbekannten Ausführungsform ist darin zu sehen, daß die Schutzhaube bei häufiger Benutzung an den Schlitzenden einreißt und dadurch unbrauchbar wird und ersetzt werden muß.

Zur Vermeidung dieser Nachteile wurden bereits in die Anordnung mehrerer Schlitze sowie die Verwendung unterschiedlicher weicher, biegsamer Materialien ausprobiert. Dadurch läßt sich zwar das Problem des Einreißens in der Schutzhaube, nicht aber das Problem der Verschmutzung verhindern.

Die eingangs erläuterte Schutzhaube läßt sich der GB-A-657, 381 entnehmen. Die hier vorgesehene Membranwandung weist eine mittige Öffnung auf, deren Rand verstärkt werden kann, um ein Einreißen der Membranwandung zu verhindern. Für diese Ausführung gelten im wesentlichen die gleichen, vorstehend beschriebenen Nachteile.

Der Erfindung liegt somit die Aufgabe zugrunde, die eingangs erläuterte Schutzhaube hinsichtlich ihrer Schutzwirkung gegenüber einer Verschmutzung der Kupplungshälfte zu verbessern.

Diese Aufgabe wird gemäß der Erfindung durch folgende Merkmale gelöst :

a) zwei hintereinander angeordnete und axial miteinander fluchtende Membranwandungen ;

b) beide Membranwandungen weisen mehrere sich jeweils von ihrem Mittelpunkt nach außen erstreckende Schlitze auf ;

c) die Schlitze der einen Membranwandung sind gegenüber den Schlitzen der anderen Membranwandung in Umfangsrichtung winkelversetzt ;

d) mit den beiden Membranwandungen sind Befestigungsmittel verbunden, um die Membranwandungen relativ gegenüber der Stirnfläche der Kupplungshälfte anordnen zu können.

Durch die erfindungsgemäße Anordnung der Schlitze in zwei einander nachgeschalteten Membranwandungen erhält man eine nahezu vollständige Abdichtung gegenüber einer durch die Membranwandungen gesteckten Schlauchkupplungshälfte. Außerdem ist ein Einreißen der Schutzhaube an den Enden der Schlitze ausgeschlossen. Vorteilhaft ist ferner, daß sich die neue Schutzhaube einfach und preiswert herstellen läßt.

Durch die Ausbildung der Schlitze werden die Membranwandungen beim Hindurchführen der Schlauchkupplungshälfte nur noch in verhältnismäßig geringem Umfang ausgewölbt, wodurch sich die Lebensdauer der Schutzhaube insgesamt wesentlich erhöht.

Die die beiden Membranwandungen gegenüber der Stirnfläche der zu schützenden Kupplungshälfte haltenden Befestigungsmittel können z. B. aus einem hülsenförmigen Gehäuse bestehen, in die die beiden Membranwandungen mit abgewinkeltem Rand eingeschoben und in geeigneter Weise befestigt sind. Dabei kann das hülsenförmige Gehäuse eine Ablaßöffnung für zwischen den beiden Stirnflächen der Kupplungshälften eingeschlossenes Hydrauliköl aufweisen.

Die genannten Befestigungsmittel können aber auch aus einem Metallreifen bestehen, der die beiden Membranwandungen an ihrem Umfang umgreift und in einem auch die abzudeckende Kupplungshälfte umfassenden Gehäuse festlegt. Dabei kann jede Membranwandung von einem separaten Metallreifen umgriffen werden.

Weitere Merkmale der Erfindung sind Gegenstand der Unteransprüche.

In der Zeichnung sind einige als Beispiele dienende Ausführungsformen der Erfindung dargestellt. Es zeigen :

Figur 1 in schematischer Darstellung die Rückseite eines Traktors mit zwei Paar Hydraulikanschlüssen ;

Figur 2 einen Längsschnitt durch eine Schutzhaube ;

Figur 3 die Schutzhaube gemäß Fig. 2 in Stirnansicht ;

Figur 4 eine abgewandelte Ausführungsform einer Schutzhaube in einer Darstellung gemäß Fig. 2 ;

Figur 5 eine in Fig. 4 dargestellte Trennwandung in vergrößertem Maßstab ;

Figur 6 die Ausführungsform gemäß Fig. 4 in Stirnansicht und

Figur 7 eine Darstellung gemäß Fig. 6 in einer abgewandelten Ausführungsform.

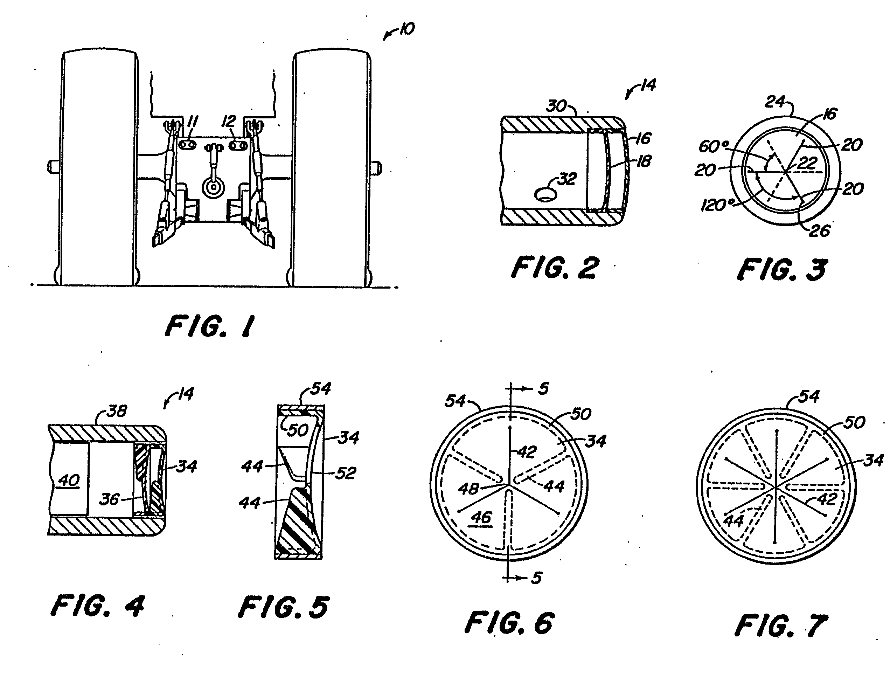

Gemäß Fig. 1 sind am hinteren Ende eines landwirtschaftlichen Traktors zwei Paar Hydraulikanschlüsse 11, 12 vorgesehen, von denen jedes Paar Anschlußelemente für zwei Hydraulikleitungen oder Schläuche aufweist. Eine dieser Leitungen führt das Hydrauliköl einem Arbeitsgerät hinzu, während die andere Leitung als Rückflußleitung dient, um die Hydraulikflüssigkeit in einen im Traktor 10 vorgesehenen Vorratsbehälter zurückzuführen. Die Hydraulikanschlüsse 11, 12 sind üblicherweise Kupplungsgegenhälften, in die am Ende von Hydraulikschläuchen befestigte Kupplungshälften eingedrückt werden.

Um die Hydraulikanschlüsse 11, 12 vor eindringendem Schmutz zu schützen, dient die in Fig. 2 dargestellte Schutzhaube 14. Diese besteht aus zwei kreisscheibenförmig ausgebildeten, mit Abstand hintereinander angeordneten und axial miteinander fluchtenden Membranwandungen 16, 18, die aus flexiblem, deformierbarem, weichem gummiartigem Material, z. B. aus Gummi bestehen, das ohne zu reißen wiederholt verformt werden kann. An sich können die Membranwandungen 16, 18 eine beliebige äußere Form aufweisen. Erfindungsgemäß aber weisen beide Membranwandungen mehrere, sich jeweils von dem Mittelpunkt 22 der Membranwandungen nach außen erstreckende Schlitze 20 auf (siehe Fig. 3). Erfindungsgemäß können drei oder mehrere Schlitze vorgesehen werden, wobei die Anordnung von sechs Schlitzen (siehe Fig. 7) bevorzugt wird. Die Schlitze 20 sind gleichlang ausgebildet und weisen voneinander gleichen Winkelabstand auf. Gemäß Fig. 3 liegen daher die drei Schlitze jeweils um 120 Winkelgrad auseinander und erstrecken sich nach außen in Richtung auf den äußeren Rand 24. Das jeweils außen liegende Ende jedes Schlitzes kann in ein kleines Loch 26 übergehen, um dadurch zusätzlich ein Einreißen des elastischen Materials zu verhindern.

Die zweite bzw. innenliegende Membranwandung 18 ist genauso ausgebildet wie die erste bzw. äußere Membranwandung 16, wobei jedoch die Schlitze 20 beider Membranwandungen gegeneinander winkelversetzt sind. Dabei liegen die Schlitze 20 der zweiten Membranwandung 18 vorzugsweise genau mittig zwischen den Schlitzen der ersten Membranwandung 16.

Gemäß Fig. 2 sind die Membranwandungen 16, 18 in einem hülsenförmigen Halter 30 befestigt, der eine Ablaßöffnung 32 aufweist und so z. B. an einem Fahrzeug befestigt ist, daß er den zu schützenden Hydraulikanschluß, wie er z. B. in Fig. 1 dargestellt ist, übergreift. Durch die Ablaßöffnung 32 kann die zwischen der Stirnfläche der abgedeckten Kupplungshälfte sowie der inneren Membranwandung 18 eingeschlossene Hydraulikflüssigkeit abgelassen werden.

Auch die in Fig. 4 dargestellte abgewandelte Ausführungsform einer Schutzhaube 14 umfaßt zwei Membranwandungen 34, 36, die so ausgebildet sind, daß sie unmittelbar in ein Hydraulikgehäuse 38 eingesetzt werden können. Letzteres umschließt die zu schützende Kupplungshälfte 40, die in einem gewünschten Abstand von der zweiten bzw. inneren Membranwandung 36 liegt.

Fig. 6 zeigt die Membranwandung 34, die hinsichtlich ihres Materials sowie der Anzahl und Anordnung der Schlitze 42 der Ausführungsform gemäß Fig. 3 entspricht. Auf der inneren Oberfläche jeder Membranwandung 34, 36 sind jeweils zwischen zwei benachbarten Schlitzen 42 Verstärkungsrippen 44 angeordnet die vorzugsweise aus dem gleichen gummiartigen Material bestehen wie die Membranwandungen 34, 36 und mit diesen zweckmäßigerweise einteilig ausgebildet sind. Diese Verstärkungsrippen 44 sollen die beiden Membranwandungen 34, 36 in ihre Ausgangsposition zurückwölben, nachdem die Schlauchkupplungshälfte herausgezogen worden ist. Die Form der Verstärkungsrippen 44 ist nicht von besonderer Bedeutung, jedoch erscheint eine Form gemäß Fig. 5 zweckmäßig, bei der sich die Verstärkungsrippe 44 hinsichtlich ihrer Breite in Richtung auf den Mittelpunkt 48 der Membranwandung verjüngt. Durch diese Ausbildung erhält man am Umfang 50 der Membranwandung zusätzliche Festigkeit, also in einem Bereich, wo man sie benötigt.

Die jeweils nach außen weisende Oberfläche 52 der Membranwandungen 34, 36 kann flach, konkav oder konvex ausgebildet sein. Die konkave Ausbildung dieser äußeren Oberfläche 52 wird bevorzugt, da sie zu einem verringerten Widerstand beim Einschieben der Schlauchkupplungshälfte führt. Durch diese konkave Ausbildung wird auch der Weg verringert, um den die äußere Oberfläche 52 in ihre Ausgangsstellung zurückbewegt werden muß. Durch diese Ausbildung wird also die Lebensdauer der Schutzhaube 14 verlängert.

Die beiden Membranwandungen 34, 36 sind an ihrem Umfang 50 von einem Metallreifen 54 umgriffen, der mit dem genannten Umfang 50 verklebt oder sonstwie verbunden sein kann und zur Aufnahme in einer Halterung, z. B. einem Gehäuse 38 dient, wie es Fig. 4 zeigt. Die Breite des Metallreifens 54 kann verändert werden, um so den Abstand zwischen den beiden Membranwandungen 34, 36 zu justieren. Dadurch kann jeder Hersteller die Schutzhaube 14 seinem besonderen Gehäuse 38 zufügen, ohne Anschlußprobleme in Kauf nehmen zu müssen.

## Ansprüche

1. Schutzhaube (14) zur Verhinderung der Verschmutzung der Stirnfläche einer Kupplungshälfte (11, 12 ; 40), z. B. der an einem Traktor (10) vorgesehenen Gegenhälfte einer Schlauchkupplung für Hydraulikleitungen, mit einer durchlöcherten Membranwandung (16, 18 ; 34, 36) aus deformierbarem elastischen Material zum Durchstecken der anderen Kupplungshälfte, gekennzeichnet durch folgende Merkmale :

a) Zwei hintereinander angeordnete und axial miteinander fluchtende Membranwandungen (16, 18 ; 34, 36)

b) beide Membranwandungen (16, 18 ; 34, 36) weisen mehrere sich jeweils von ihrem Mittelpunkt (22 ; 48) nach außen erstreckende Schlitze (20 ; 42) auf ;

c) die Schlitze (20 ; 42) der einen Membranwandung (16 ; 34) sind gegenüber den Schlitzen (20 ; 42) der anderen Membranwandung (18 ; 36) in Umfangsrichtung winkelversetzt ;

d) mit den beiden Membranwandungen (16, 18 ; 34, 36) sind Befestigungsmittel (30 ; 54) verbunden, um die Membranwandungen relativ zur Stirnfläche der Kupplungshälfte (11, 12 ; 40) einstellbar anordnen zu können.

2. Schutzhaube nach Anspruch 1, dadurch gekennzeichnet, daß beide Membranwandungen (16, 18 ; 34, 36) kreisscheibenförmig ausgebildet sind.

3. Schutzhaube nach Anspruch 1 oder 2, dadurch gekennzeichnet, daß beide Membranwandungen (34, 36) Verstärkungsrippen (44) aufweisen, die in etwa gleichem Winkelabstand von den benachbarten Schlitzen (42) liegen.

4. Schutzhaube nach Anspruch 3, dadurch gekennzeichnet, daß die genannten Verstärkungsrippen (44) auf der inneren Oberfläche jeder Membranwandung (34, 36) angeordnet sind.

5. Schutzhaube nach Anspruch 4, dadurch gekennzeichnet, daß jede Membranwandung (34, 36) mit ihren Verstärkungsrippen (44) einteilig ausgebildet ist.

6. Schutzhaube nach einem der vorhergehenden Ansprüche, dadurch gekennzeichnet, daß jede Membranwandung (16, 18 ; 34, 36) zumindest drei Schlitze (20 ; 42) aufweist, die in gleichem Winkelabstand voneinander und gegenüber den Schlitzen der anderen Membranwandung um jeweils halben Winkelabstand versetzt angeordnet sind.

7. Schutzhaube nach einem der vorhergehenden Ansprüche, dadurch gekennzeichnet, daß beide Membranwandungen (34, 36) jeweils sechs gleichlange Schlitze (42) aufweisen.

8. Schutzhaube nach einem der vorhergehenden Ansprüche, dadurch gekennzeichnet, daß die beiden Membranwandungen (34, 36) an ihrem Umfang von einem mit ihnen verbundenen Metallreifen (54) umgriffen sind, der in einem auch die abzudeckende Kupplungshälfte (40) umfassenden Gehäuse (38) festgelegt ist.

9. Schutzhaube nach einem der vorhergehenden Ansprüche, dadurch gekennzeichnet, daß beide Membranwandungen (34, 36) eine konkave äußere (52) Oberfläche aufweisen.

10. Schutzhaube nach einem der Ansprüche 1 bis 8, dadurch gekennzeichnet, daß beide Membranwandungen (16, 18) eine konvexe äußere Oberfläche aufweisen.

11. Schutzhaube nach einem der vorhergehenden Ansprüche, dadurch gekennzeichnet, daß beide Membranwandungen (34, 36) eine konvexe innere Oberfläche aufweisen.

## Claims

1. A protective cap (14) for preventing fouling of the end surface of a coupling member (11, 12 ; 40), for example the co-operating member of a hose coupling for hydraulic lines, which is provided on a tractor (10), having a perforated diaphragm wall (16, 18 ; 34, 36) comprising deformable resilient material, for the other coupling member to be fitted therethrough, characterised by the following features :

a) two axially aligned diaphragm walls (16, 18 ; 34, 36) which are arranged one behind the other,

b) the two diaphragm walls (16, 18 ; 34, 36) have a plurality of slits (20 ; 42) which extend outwardly from the centre (22 ; 48) of the respective diaphragm wall ;

c) the slits (20 ; 42) of the one diaphragm wall (16 ; 34) are angularly displaced in the peripheral direction relative to the slits (20 ; 42) in the other diaphragm wall (18 ; 36) ; and

d) connected to the two diaphragm walls (16, 18 ; 34, 36) are securing means (30 ; 54) in order to permit the diaphragm walls to be arranged adjustably relative to the end surface of the coupling member (11, 12 ; 40).

2. A protective cap according to claim 1, characterised in that both diaphragm walls (16, 18 ; 34, 36) are in the form of a circular disc.

3. A protective cap according to claim 1 or claim 2, characterised in that both diaphragm walls (34, 36) have reinforcing ribs (44) which are at substantially equal angular spacings from the adjacent slits (42).

4. A protective cap according to claim 3, characterised in that said reinforcing ribs (44) are arranged on the inner surface of each diaphragm wall (34, 36).

5. A protective cap according to claim 4, characterised in that each diaphragm wall (34, 36) is formed integrally with its reinforcing ribs (44).

6. A protective cap according to one of the preceding claims, characterised in that each diaphragm wall (16, 18 ; 34, 36) has at least three slits (20 ; 42) which are arranged at the same angular spacing from each other and which are displaced relative to the slits in the other diaphragm wall by half the angular spacing between the respective slits.

7. A protective cap according to one of the preceding claims, characterised in that both diaphragm walls (34, 36) have six slits (42) of equal length.

8. A protective cap according to one of the preceding claims, characterised in that a metal rim (54) is mounted to and surrounding the periphery of the two diaphragm walls (34, 36) and is fixed in a housing (38) which also surrounds the coupling member (40) to be covered.

9. A protective cap according to one of the preceding claims, characterised in that both diaphragm walls (34, 36) have a concave outer surface (52).

10. A protective cap according to the claims 1 till 8, characterised in that both diaphragm walls (16, 18) have a convex outer surface.

11. A protective cap according to one of the preceding claims, characterised in that both diaphragm walls (34, 36) have a convex inner surface.


**Revendications**.

1. Capuchon de protection (14) pour empêcher l'encrassement de la surface d'extrémité d'une moitié de raccord (11, 12 ; 40), par exemple de la moitié prévue sur un tracteur (10) d'un raccord de tuyau pour conduites hydrauliques, comportant une cloison formant membrane perforée (16, 18 ; 34, 36) en matière élastique déformable pour l'emboîtement de l'autre moitié de raccord, caractérisé par les particularités suivantes :

a) deux cloisons en forme de membranes (16, 18 ; 34, 36) disposées l'une derrière l'autre et alignées axialement ;

b) les deux membranes (16, 18 ; 34, 36) comportent plusieurs fentes (20 ; 42) s'étendant chaque fois vers l'extérieur depuis leur centre (22 ; 48) ;

c) les fentes (20 ; 42) de l'une des membranes (16 ; 34) sont décalées angulairement dans le sens circonférentiel par rapport aux fentes (20 ; 42) de l'autre membrane (18 ; 36),

d) des organes de fixation (30 ; 54) sont reliés aux deux membranes (16, 18 ; 34, 36) pour pouvoir positionner les membranes de façon réglable par rapport à la surface d'extrémité de la moitié de raccord (11, 12 ; 40).

2. Capuchon de protection suivant la revendication 1, caractérisé en ce que les deux membranes (16, 18 ; 34, 36) ont la forme de disques circulaires.

3. Capuchon de protection suivant la revendication 1 ou 2, caractérisé en ce que les deux membranes (34, 36) comportent des nervures de renforcement (44) qui se trouvent sensiblement selon le même écartement angulaire par rapport aux fentes voisines (42).

4. Capuchon de protection suivant la revendication 3, caractérisé en ce que les nervures de renforcement mentionnées (44) sont disposées sur la surface intérieure de chaque membrane (34, 36).

5. Capuchon de protection suivant la revendication 4, caractérisé en ce que chaque membrane (34, 36) est réalisée d'un seul tenant avec ses nervures de renforcement (44).

6. Capuchon de protection suivant l'une quelconque des revendications précédentes, caractérisé en ce que chaque membrane (16, 18 ; 34, 36) comporte au moins trois fentes (20 ; 42) qui sont décalées l'une par rapport à l'autre selon un même écartement angulaire, et par rapport aux fentes de l'autre membrane chaque fois selon la moitié de cet écartement angulaire.

7. Capuchon de protection suivant l'une quelconque des revendications précédentes, caractérisé en ce que les deux membranes (34, 36) comportent chaque fois six fentes (42) de même longueur.

8. Capuchon de protection suivant l'une quelconque des revendications précédentes, caractérisé en ce que les deux membranes (34, 36) sont entourées sur leur périphérie par un anneau métallique (54) relié à ces membranes, qui est immobilisé dans un boîtier (38) entourant la moitié de raccord à coiffer (40).

9. Capuchon de protection suivant l'une quelconque des revendications précédentes, caractérisé en ce que les deux membranes (34, 36) présentent une surface extérieure (52) de forme concave.

10. Capuchon de protection suivant l'une quelconque des revendications 1 à 8, caractérisé en ce que les deux membranes (16, 18) présentent une surface extérieure convexe.

11. Capuchon de protection suivant l'une quelconque des revendications précédentes, caractérisé en ce que les deux membranes (34, 36) présentent une surface intérieure convexe.

FIG. 1

FIG. 2

FIG. 3

FIG. 4

FIG. 5

FIG. 6

FIG. 7

0 040 403